# EUROPÄISCHE PATENTSCHRIFT

(11) **EP 1 268 147 B1**
(45) Veröffentlichungstag und Bekanntmachung des Hinweises auf die Patenterteilung: **26.01.2005**
(21) Anmeldenummer: 02700238.5
(22) Anmeldetag: 15.02.2002
(51) Int. Cl.: B27D 5/00, B23D 45/02, B23D 45/20

(54) **KAPPAGGREGAT**
CUTTING SYSTEM
ENSEMBLE DE COUPE A BALANCIER

(30) Priorität: 15.03.2001 DE 10112440
(43) Veröffentlichungstag der Anmeldung: 02.01.2003
(73) Patentinhaber: REICH SPEZIALMASCHINEN GmbH, 72622 Nürtingen (DE)
(72) Erfinder: HENZLER, Roland, 72622 Nürtingen-Raidwangen (DE); BINDER, Werner, 70567 Stuttgart (DE)
(74) Vertreter: HOEGER, STELLRECHT & PARTNER Patentanwälte
(86) Internationale Anmeldenummer: PCT/EP2002/001607
(87) Internationale Veröffentlichungsnummer: WO 2002/074506

(56) Entgegenhaltungen:
- EP-A- 0 538 513
- DE-A- 2 553 042
- DE-A- 3 224 467
- DE-A- 3 717 207
- DE-U- 8 807 514

## Beschreibung

Die Erfindung betrifft ein Kappaggregat für Maschinen zur Bearbeitung eines geradlinig und fortlaufend bewegten plattenförmigen Werkstükkes zum Abtrennen von über die vorderen und/oder hinteren, im wesentlichen quer zur Bewegungsrichtung des Werkstückes ausgerichteten Querseiten des Werkstückes hinausragenden Überständen von Kantenmaterial, welches an parallel zur Bewegungsrichtung verlaufenden Längsseiten des Werkstückes angebracht ist, mit einer ein motorisch angetriebenes Sägeblatt umfassenden Sägeeinheit, die zwischen einer Stellung oberhalb des Werkstückes und einer Stellung unterhalb des Werkstückes verfahrbar gehalten ist, und mit einem dem Sägeblatt zugeordneten, zumindest eine Tastfläche aufweisenden Tastorgan, wobei die Tastfläche an die vordere oder hintere Querseite des Werkstükkes anlegbar und die Schnittebene des Sägeblattes fluchtend zur Tastfläche ausrichtbar ist.

Derartige Kappaggregate sind aus der EP 0 538 513 B1 bekannt. Sie kommen insbesondere bei Kantenanleimmaschinen zum Einsatz, mit deren Hilfe Kantenmaterial in Form einer Anleimkante an eine Längsseite des Werkstückes angeleimt werden kann. Die Anleimkante weist nachdem Verleimen einen Kantenüberstand auf, der mittels des Kappaggregates abgetrennt werden kann.

Zum Abtrennen kommt eine Sägeeinheit mit einem üblicherweise mittels eines Elektromotors angetriebenen Sägeblatt zum Einsatz. Die Sägeeinheit kann zwischen einer Stellung oberhalb und einer Stellung unterhalb des Werkstückes verfahren werden, wobei während der Bewegung mittels des Sägeblatts ein Kantenüberstand abgetrennt wird.

Zur Ausrichtung des Sägeblattes in Höhe der vorderen und/oder hinteren Querseite des Werkstückes kommt das Tastorgan zum Einsatz, wobei die Schnittebene des Sägeblattes fluchtend zur Tastfläche des Tastorganes ausgerichtet werden kann.

Wird die Schnittebene fluchtend zur Tastfläche ausgerichtet, so wird der Kantenüberstand mit einem senkrecht zur Bewegungsrichtung des Werkstückes ausgerichteten Sägeschnitt abgetrennt. Eine derartige Ausrichtung wird üblicherweise dann gewählt, wenn lediglich an die Längsseiten des Werkstückes, nicht aber an die Querseiten des Werkstückes ein Kantenmaterial angeleimt ist. In vielen Fällen wurde jedoch in einem vorhergehenden Arbeitsschritt an die Querseiten bereits ein Kantenmaterial angebracht. Wird anschließend auch die Längsseite des Werkstückes mit einem Kantenmaterial überzogen, so muß beim Abtrennen von Kantenüberständen dafür Sorge getragen werden, daß das Sägeblatt nicht das bereits an die Querseite angeleimte Kantenmaterial nicht beschädigen kann.

Die Ausrichtung des Sägeblattes schräg zur Tastfläche macht bei bekannten Kappaggregaten eine aufwendige Umrüstung erforderlich, die nur von Fachpersonal durchgeführt werden kann. Dies ist mit einem nicht unbeträchtlichen Zeit- und Kostenaufwand verbunden.

Aus der DE 37 17 207 A1 ist ein Kappaggregat bekannt, bei dem das Sägeblatt zum Abtrennen des vorderen und des hinteren Kantenüberstands zwischen zwei fest vorgegebenen, jeweils schräg zur korrespondierenden Tastfläche ausgerichteten Stellungen verschwenkt werden kann. Das Sägeblatt ist an einer Sägeeinheit gelagert, die in Führungsschlitzen verschwenkbar gehalten ist. Die Führungsschlitze definieren feste Schrägstellungen, die die Sägeeinheit beim Abtrennen eines Kantenüberstands zwingend einnimmt. Eine Änderung der Schrägstellung ist ebenso wenig vorgesehen wie eine Ausrichtung des Sägeblatts fluchtend zur Tastfläche.

Aufgabe der vorliegenden Erfindung ist es, ein Kappaggregat der eingangs genannten Art derart weiterzubilden, daß die Ausrichtung des Sägeblattes relativ zur Tastfläche vereinfacht wird und auf einfache Weise geändert werden kann.

Diese Aufgabe wird bei einem Kappaggregat der gattungsgemäßen Art erfindungsgemäß dadurch gelöst, daß das Sägeblatt zwischen einer ersten, fluchtend zur Tastfläche ausgerichteten Arbeitsstellung und einer zweiten, schräg zur Tastfläche ausgerichteten Arbeitsstellung verschwenkbar gehalten ist, wobei das Kappaggregat verstellbare Anschläge umfaßt zur Ausrichtung des Sägeblattes in seiner ersten, fluchtenden Arbeitsstellung und in seiner zweiten, schräg ausgerichteten Arbeitsstellung. Eine derartige Ausgestaltung des Kappaggregates ermöglicht es, mittels eines einzigen Sägeblattes sowohl senkrecht zur Bewegungsrichtung des Werkstückes ausgerichtete Sägeschnitte als auch schräg zur Bewegungsrichtung ausgerichtete Sägeschnitte vorzunehmen, ohne daß hierzu eine aufwendige Umrüstung des Kappaggregates erforderlich ist. Die verschwenkbare Lagerung des Sägeblattes ermöglicht es vielmehr, auf einfach handhabbare Weise die Ausrichtung des Sägeblattes bezogen auf die Tastfläche des Tastorganes zu verändern. Hierbei kann insbesondere vorgesehen sein, daß die Ausrichtung des Sägeblattes in einem vorgegebenen Winkelbereich bezogen auf die Tastfläche kontinuierlich variierbar ist. Mittels der Anschläge kann das Sägeblatt auf konstruktiv einfache Weise zuverlässig ausgerichtet werden. Hierzu können beispielsweise am Schwenkarm Stifte vorgesehen sein, die an die Anschläge anlegbar sind, um eine zuverlässige Ausrichtung des Sägeblattes in der jeweiligen Arbeitsstellung zu ermöglichen. Die Anschläge sind verstellbar ausgestaltet, dies gibt die Möglichkeit, je nach zum Einsatz kommendem Kantenmaterial, dessen Überstand abgetrennt werden soll, unterschiedliche Ausrichtungen für das Sägeblatt in seiner zweiten Arbeitsstellung vorzunehmen. Insbesondere kann vorgesehen sein, den Winkel, den das Sägeblatt in seiner zweiten Arbeitsstellung bezogen auf die Tastfläche einnehmen soll, in Abhängigkeit von der Dicke des Kantenmaterials zu wählen.

Günstig ist es, wenn das Sägeblatt in der zweiten Arbeitsstellung in einem Winkel von bis zu etwa 15° zur Tastfläche positionierbar ist.

Von besonderem Vorteil ist es, wenn das Tastorgan eine erste Tastfläche zur Anlage an die in Bewegungsrichtung vordere Querseite des Werkstückes und eine zweite Tastfläche zur Anlage an die in Bewegungsrichtung hintere Querseite des Werkstückes umfaßt, wobei das Sägeblatt sowohl fluchtend zu den jeweiligen Tastflächen als auch schräg zu den jeweiligen Tastflächen ausrichtbar ist. Dies ermöglicht es, mittels eines einzigen Kappaggregates sowohl einen vorderen als auch einen hinteren Kantenüberstand abzutrennen, wobei wahlweise ein Sägeschnitt senkrecht zur Bewegungsrichtung des Werkstückes oder ein Sägeschnitt schräg zur Bewegungsrichtung des Werkstückes vorgenommen werden kann.

Bevorzugt sind das Tastorgan und das Sägeblatt bezogen auf die Bewegungsrichtung des Werkstückes verschiebbar zueinander gehalten und das Sägeblatt ist bezogen auf die vordere und auf die hintere Tastfläche jeweils zwischen einer ersten, fluchtenden Arbeitsstellung und einer zweiten, schräg ausgerichteten Arbeitsstellung verschwenkbar. Dies ermöglicht es zum einen, Sägeblatt und Tastorgan derart relativ zueinander zu verschieben, daß das Sägeblatt zu beiden Tastflächen eine fluchtende Anordnung einnehmen kann. Zum anderen kann das Sägeblatt mittels einer Schwenkbewegung zwischen seiner ersten Arbeitsstellung und seiner zweiten Arbeitsstellung kontinuierlich verstellt werden.

Bei einer besonders bedienungsfreundlichen Ausführungsform des erfindungsgemäßen Kappaggregates ist vorgesehen, daß das Sägeblatt mittels eines Kolben-Zylinderaggregates verschwenkbar ist. Das Kolben-Zylinderaggregat kann hierbei pneumatisch oder hydraulisch betätigbar sein.

Besonders günstig ist es, wenn das Sägeblatt mittels des Kolben-Zylinderaggregates sowohl verschwenkbar als auch verschiebbar ist. Dies ermöglicht eine konstruktiv einfache Ausgestaltung, wobei keine separaten Antriebsaggregate zum Verschwenken und zum Verschieben des Sägeblatts relativ zum Tastorgan erforderlich sind. Vielmehr kann mittels eines einzigen Kolben-Zylinderaggregates das Sägeblatt sowohl verschwenkt als auch verschoben werden.

Zum Verschieben der Sägeeinheit relativ zum Tastorgan kommt vorzugsweise ein parallel zur Bewegungsrichtung des Werkstückes verschiebbares Führungselement zum Einsatz, wobei die Sägeeinheit um eine vertikale ausgerichtete Schwenkachse verschwenkbar am Führungselement gehalten ist. Das Führungselement kann hierbei an Profilschienen gehalten sein, beispielsweise in Form einer Schwalbenschwanzführung. Es kann allerdings auch eine Rundführung zum Einsatz kommen.

Günstig ist es, wenn das Führungselement einen horizontal verschiebbaren Schlitten umfaßt, an dem die Sägeeinheit verschwenkbar gelagert ist. Der Horizontalschlitten kann an parallel zur Bewegungsrichtung der Werkstückes ausgerichteten Führungsschienen verschiebbar gelagert sein und die Sägeeinheit aufnehmen, die verschwenkbar am Horizontalschlitten gehalten ist.

Die Lagerung der Sägeeinheit am Führungselement erfolgt vorzugsweise mittels eines Schwenkarmes, der schwenkbar am Führungselement gelagert ist.

Von besonderem Vorteil ist es, wenn der Schwenkarm mittels eines Kolben-Zylinderaggregates verschwenkbar ist. Hierbei hat es sich als vorteilhaft erwiesen, wenn das Kolben-Zylinderaggregat am Schwenkarm angelenkt ist, so daß zusätzliche Übertragungsmittel zur Übertragung der Bewegung des Kolben-Zylinderaggregates auf den Schwenkarm entfallen können.

Sollen lediglich Sägeschnitte senkrecht zur Bewegungsrichtung der Werkstücke vorgenommen werden, so hat es sich als vorteilhaft erwiesen, wenn die Sägeeinheit mit in erster Arbeitsstellung ausgerichtetem Sägeblatt am Führungselement lösbar fixierbar ist. So kann beispielsweise vorgesehen sein, den Schwenkarm in der ersten Arbeitsstellung des Sägeblattes am Führungselement lösbar zu fixieren, so daß im fixierten Zustand keine Schwenkbewegung erfolgen kann, der Schwenkarm jedoch längs der Führungsanordnung mittels des Kolben-Zylinderaggregates verschoben werden kann.

Bei einer besonders bevorzugten Ausführungsform des erfindungsgemäßen Kappaggregates ist vorgesehen, daß die Anschläge zur Ausrichtung des Sägeblatts in Bewegungsrichtung des Werkstückes verstellbar sind. Als Anschläge können beispielsweise in Bewegungsrichtung des Werkstückes verstellbare Anschlagbolzen zum Einsatz kommen.

Um zu gewährleisten, daß das Sägeblatt in Abhängigkeit von der Stellung der Anschläge ausrichtbar ist, hat es sich vorteilhaft erwiesen, wenn den Anschlägen mindestens ein Federelement zugeordnet ist zur Verzögerung einer Verschiebebewegung der Sägeeinheit bei Annäherung an einen Anschlag. Mittels des Federelementes kann auf die Sägeeinheit bei seiner Annäherung an den Anschlag eine derartige Federkraft ausgeübt werden, daß die Verschiebebewegung der Sägeeinheit parallel zur Bewegungsrichtung des Werkstückes verzögert wird, während eine Verschwenkbewegung der Sägeeinheit ungehindert erfolgen kann. Entfernt sich die Sägeeinheit von einem zugeordneten Anschlag, so wird die Verschiebebewegung der Sägeeinheit mittels des Federelementes beschleunigt, so daß sich die Sägeeinheit zunächst parallel zur Bewegungsrichtung vom Anschlag entfernt, um erst im Abstand zum jeweiligen Anschlag zusätzlich zur Verschiebebewegung eine Verschwenkbewegung durchzuführen.

Das Federelement kann beispielsweise als an den Horizontalschlitten anlegbaren Federbolzen ausgestaltet sein. Hierbei hat es sich als besonders günstig erwiesen, wenn jeweils zwei Anschlägen ein gemeinsamer Federbolzen zugeordnet ist, der bei Annäherung der Sägeeinheit an die beiden Anschläge eine Federkraft auf die Sägeeinheit ausübt.

Die nachfolgende Beschreibung einer bevorzugten Ausführungsform der Erfindung dient im Zusammenhang mit der Zeichnung der näheren Erläuterung. Es zeigen:
- Figur 1:: eine Draufsicht auf ein Kappaggregat beim Abtrennen eines vorderen Kantenüberstandes mit parallel zu einer vorderen Tastfläche ausgerichtetem Sägeblatt;
- Figur 2:: eine Schnittansicht längs der Linie 2-2 in Figur 1;
- Figur 3:: eine Draufsicht auf das Kappaggregat beim Abtrennen eines hinteren Kantenüberstandes mit fluchtend zu einer hinteren Tastfläche ausgerichtetem Sägeblatt;
- Figur 4:: eine Draufsicht auf das Kappaggregat beim Abtrennen eines vorderen Kantenüberstandes mit schräg zur vorderen Tastfläche ausgerichtetem Sägeblatt und
- Figur 5:: eine Draufsicht auf das Kappaggregat zum Abtrennen eines hinteren Kantenüberstandes mit schräg zur hinteren Tastfläche ausgerichtetem Sägeblatt.

In der Zeichnung ist ein insgesamt mit dem Bezugszeichen 10 belegtes Kappaggregat schematisch dargestellt zum Abtrennen eines vorderen Kantenüberstandes 12 und eines hinteren Kantenüberstandes 14 einer Anleimkante 16, die an eine Längsseite 18 eines Werkstückes 20 angeleimt wurde. Das Kappaggregat 10 bildet eine von mehreren Stationen einer Maschine zur Bearbeitung von geradlinig und fortlaufend in einer Werkstückdurchlaufebene bewegten plattenförmigen Werkstükken. Hierbei wird in einer dem Kappaggregat 10 vorgelagerten Anleimstation die Anleimkante 16 an die Längsseite 18 des Werkstückes 20 angeleimt. Die Anleimkante 16 steht in Bewegungsrichtung 22 des Werkstückes 20 nach vorne über die vordere Querseite 24 und nach hinten über die hintere Querseite 26 des Werkstückes 20 hinaus und bildet in diesem Bereichen die vorderen und hinteren Kantenüberstände 12 bzw. 14.

Zum Abtrennen der vorderen und hinteren Kantenüberstände 12, 14 umfaßt das Kappaggregat 10 eine einzige Sägeeinheit 28 mit einem Elektromotor 30 und einem drehfest an der Motorwelle 31 gehaltenen Sägeblatt 32, das von einer Schutzhaube 33 umgeben ist und lediglich in dem dem Werkstück 20 zugewandten Umfangsbereich über die Schutzhaube 33 übersteht.

Die Sägeeinheit 28 ist mittels Befestigungsschrauben 35 drehfest an einem Schwenkarm 37 festgelegt, der seinerseits um eine vertikal ausgerichtete Schwenkachse 39 verschwenkbar an einem Horizontalschlitten 41 gelagert ist. Der Horizontalschlitten 41 wiederum ist an zwei parallel zur Bewegungsrichtung 22 des Werkstückes 20 ausgerichteten Führungsstangen 42, 43 verschiebbar gehalten, die ihrerseits an einem Vertikalschlitten 45 festgelegt sind, der an vertikal ausgerichteten Führungsstangen 46 und 47 verschiebbar gehalten ist.

Mittels des Vertikalschlittens 45 kann die Sägeeinheit zwischen einer Stellung oberhalb des Werkstückes 20 und einer Stellung unterhalb des bewegten Werkstückes 20 verfahren werden, um hierbei die Kantenüberstände 12 und 14 abzutrennen. Am Vertikalschlitten 45 ist mittels in der Zeichnung nicht dargestellter Schrauben ein Tastorgan 49 in Form eines Auslegers starr gehalten. Das Tastorgan 49 weist eine erste, der vorderen Querseite 24 zugeordnete Tastfläche 51 und eine zweite, der hinteren Querseite 26 zugeordnete Tastfläche 52 auf. Die erste Tastfläche 51 ist zum Abtrennen des vorderen Kantenüberstandes 12 an die vordere Querseite 24 anlegbar. In entsprechender Weise ist zum Abtrennen des hinteren Kantenüberstandes 14 die zweite Tastfläche 52 an die Querseite 26 anlegbar.

Mit Hilfe des Horizontalschlittens 41 kann die Sägeeinheit 28 derart parallel zur Bewegungsrichtung 22 verschoben werden, daß das Sägeblatt 32 zum Abtrennen der Kantenüberstände 12 und 14 jeweils eine fluchtende Ausrichtung zu den Tastflächen 51 und 52 einnehmen kann.

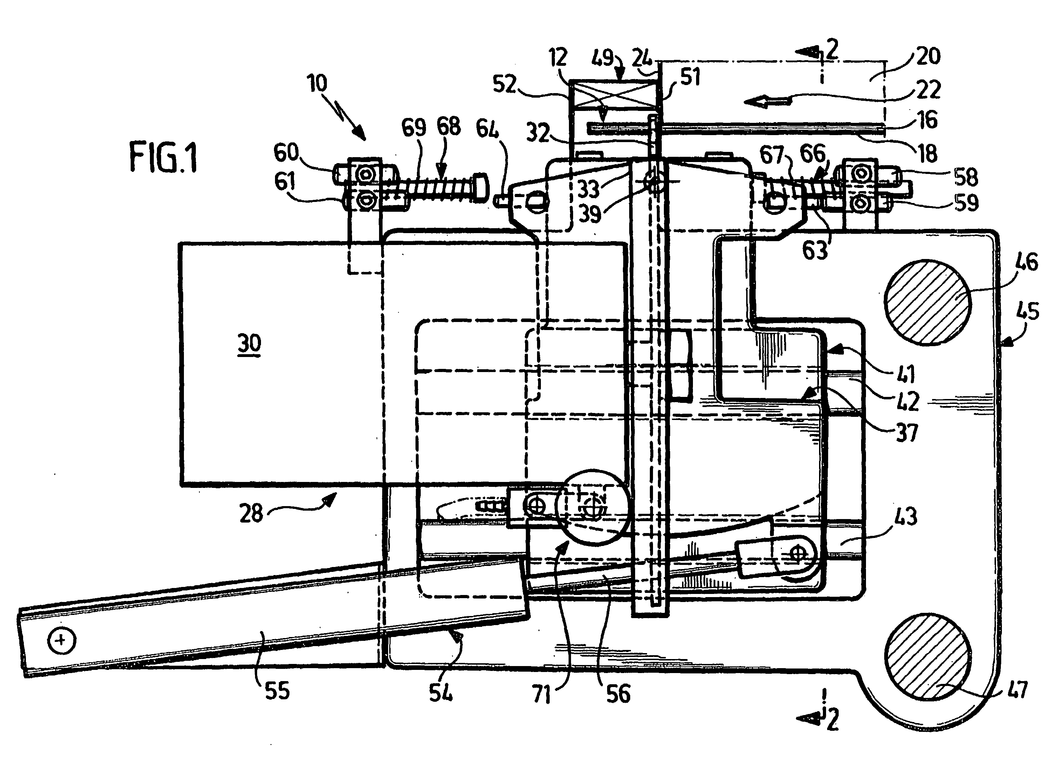

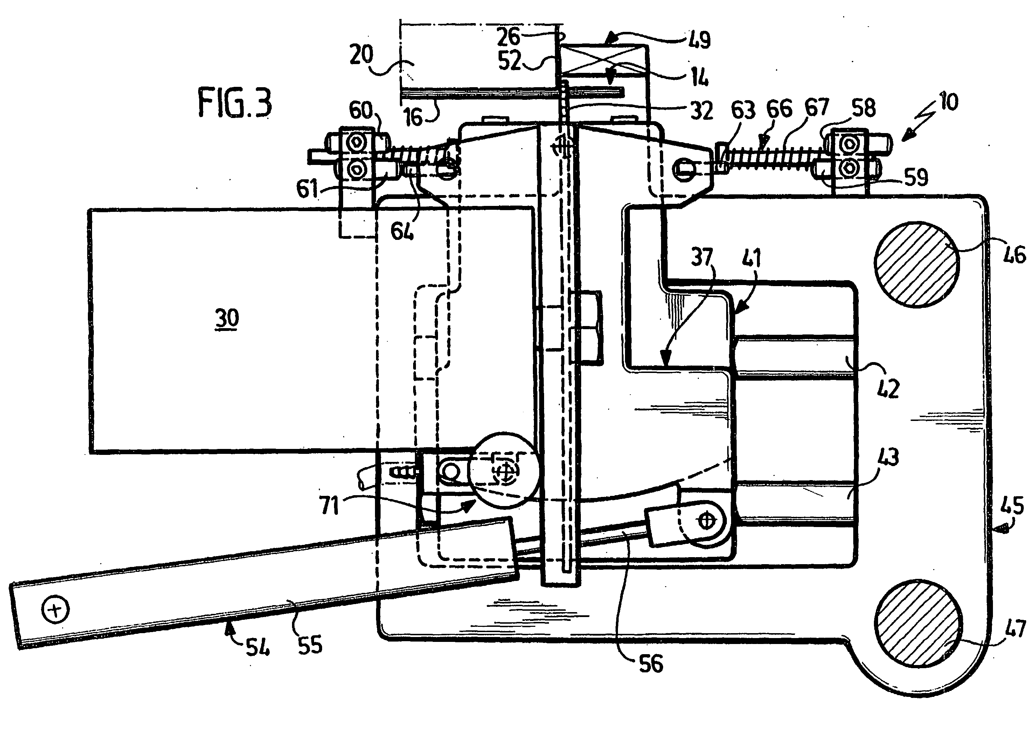

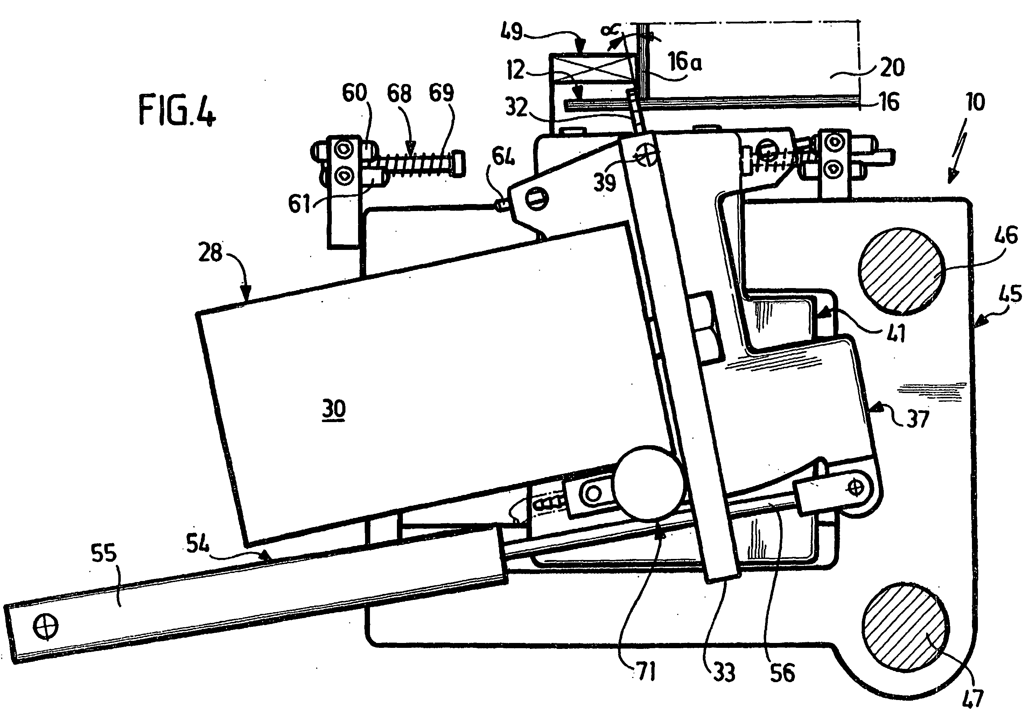

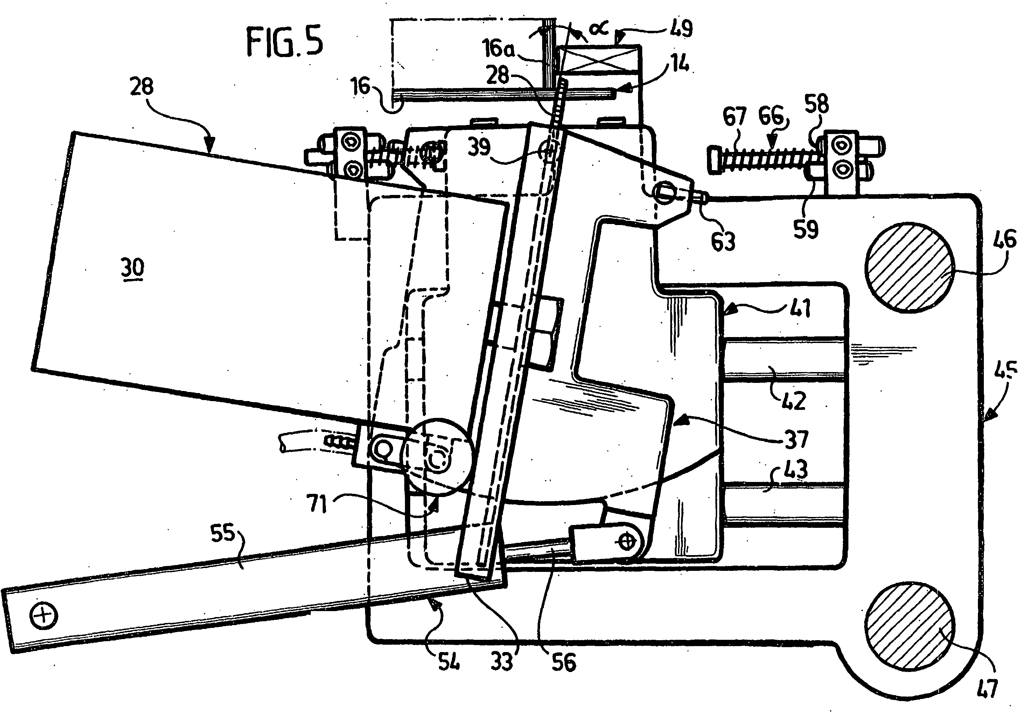

Eine Ausrichtung des Sägeblattes 52 fluchtend zu den Tastflächen 51 bzw. 52 ist allerdings nur dann erwünscht, wenn das Werkstück 20 an den vorderen und hinteren Querseiten 24 bzw. 26 noch keine Anleimkante trägt, wie dies in den Figuren 1 und 3 dargestellt ist. Wurde allerdings in einem vorhergehenden Arbeitsschritt an die vorderen und hinteren Querseiten bzw. 26 bereits eine Anleimkante 16a angeleimt, wie dies in den Figuren 4 und 5 dargestellt ist, so kann die Ausrichtung des Sägeblattes 32 fluchtend zu den Tastflächen 51 bzw. 52 beim Abtrennen der vorderen und hinteren Kantenüberstände 12 bzw. 14 eine Beschädigung der Anleimkante 16a zur Folge haben. Um eine derartige Beschädigung zu verhindern, kann deshalb der Schwenkarm 37 um die Schwenkachse 39 verschwenkt werden, wie dies in den Figuren 4 und 5 dargestellt ist, so daß das Sägeblatt 32 schräg zu den Tastflächen 51 und 52 ausgerichtet ist und mit diesen einen Winkel α von maximal etwa 15°, vorzugsweise etwa 10° einnimmt.

Der Antrieb des Horizontalschlittens 41 und des Schwenkarms 37 erfolgt vorzugsweise pneumatisch mittels eines Kolben-Zylinderaggregates 54, dessen Zylinder 55 mit seinem freien Ende an einem in der Zeichnung nicht dargestellten Stützteil der Bearbeitungsmaschine angelenkt ist, und dessen Kolbenstange 56 mit ihrem freien Ende am Schwenkarm 37 angelenkt ist. Durch Durckbeaufschlagung des Kolben-Zylinderaggregates kann somit der Schwenkarm 37 um die Schwenkachse 39 verschwenkt und es kann zusätzlich der Horizontalschlitten 41 längs der Führungsstangen 42 und 43 verschoben werden.

Um sicherzustellen, daß der Schwenkarm 37 und die an ihm festgelegte Sägeeinheit 28 zum Abtrennen der Kantenüberstände 12 und 14 eine definierte Stellung einnehmen, sind am Vertikalschlitten 45 insgesamt vier in ihrer Lage parallel zur Bewegungsrichtung 22 bezogen auf den Vertikalschlitten 45 verstellbare Anschlagbolzen 58, 59, 60, 61 gehalten, die parallel zueinander ausgerichtet sind. Der Schwenkarm 37 trägt den Anschlagbolzen 58 und 59 gegenüberliegend einen korrespondierenden Anschlagstift 63, und auf der dem Anschlagstift 63 gegenüberliegenden Seite ist am Schwenkarm 37 ein Anschlagstift 64 festgelegt, der den Anschlagbolzen 60 und 61 zugewandt ist.

In vertikaler Richtung unterhalb der Anschlagbolzen 58 und 59 ist am Vertikalschlitten 65 ein Federbolzen 66 mit einer Schraubenfeder 67 gehalten, ein entsprechender Federbolzen 68 mit einer Schraubenfeder 69 ist unterhalb der Anschlagbolzen 60 und 61 am Vertikalschlitten 45 angeordnet.

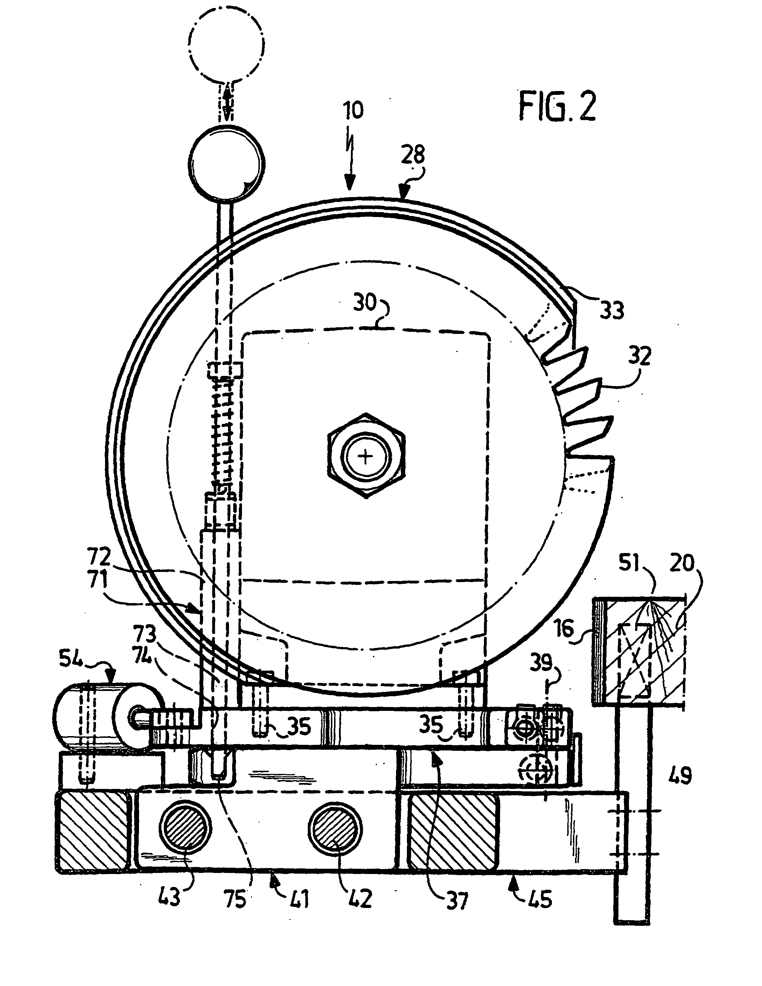

Dem Elektromotor 30 benachbart trägt der Schwenkarm 37 eine Verriegelung 71 mit einem in einer Hülse 72 geführten stabförmigen Riegel 73, der eine fluchtend angeordnete Durchgangsbohrung 74 des Schwenkarmes 37 durchgreifen und in ein Sackloch 75 des Horizontalschlittens 41 eintauchen kann. Der Riegel 73 kann zwischen einer in Figur 2 strichpunktiert dargestellten erhöhten Stellung, in der er zum Sackloch 75 beabstandet ist, und einer in Figur 2 in durchgezogener Linie dargestellten abgesenkten Stellung, in der er in das Sackloch 75 eintaucht, verschoben werden. Nimmt der Riegel 73 seine abgesenkte Stellung ein, so wird damit eine Verschwenkbewegung des Schwenkarmes 37 verhindert, so daß die Sägeeinheit 28 mittels des Kolben-Zylinder-aggregat 54 lediglich parallel zur Bewegungsrichtung 22 des Werkstückes 20 verschoben werden kann. Taucht der Riegel 73 in das Sackloch 75 ein, so ist das Sägeblatt 32 fluchtend zu den Tastflächen 51 und 52 ausgerichtet. Die Verschiebebewegung des Horizontalschlittens 41 längs der Führungsstangen 42 und 43 wird dann durch die Anschlagbolzen 59 und 61 begrenzt, an die die zugeordneten Anschlagstifte 63 bzw. 64 beim Verschieben des Horizontalschlittens 41 anlegbar sind, so daß durch die Anschlagbolzen 59 und 61 der Hub des Horizontalschlittens 41 begrenzt wird. Wird die Verriegelung 71 gelöst, so kann der Schwenkarm 37 zusätzlich zur Verschiebebewegung parallel zur Bewegungsrichtung 22 eine Schwenkbewegung um die Schwenkachse 39 ausführen. Die Bewegung des Schwenkarmes 37 wird dann durch die Anschlagbolzen 58 und 60 begrenzt, an die die zugeordneten Anschlagstifte 63 bzw. 64 bei einer kombinierten Verschiebe-Schwenkbewegung anlegbar sind. Der Sägeeinheit 28 und damit dem Sägeblatt 32 ist folglich sowohl beim Abtrennen des vorderen Kantenüberstandes 12 als auch beim Abtrennen des hinteren Kantenüberstandes 14 bei fluchtender Ausrichtung zu den jeweiligen Tastflächen 51 und 52 und auch bei schräger Ausrichtung zu den genannten Tastflächen jeweils ein separater Anschlag zugeordnet, durch dessen Einstellung die Ausrichtung des Sägeblattes 32 definiert vorgebbar ist.

Wird der Horizontalschlitten 41 durch Druckbeaufschlagung des Kolben-Zylinderaggregates 54 in Richtung auf die Anschlagbolzen 58 und 59 bewegt, so erfährt er bei Annäherung an die Anschlagbolzen 58, 59 eine elastische Verzögerungskraft aufgrund des auf ihn einwirkenden Federbolzens 66. Dies hat zur Folge, daß die Verschiebebewegung des Schwenkarmes 37 verzögert wird, während eine Verschwenkbewegung des Schwenkarmes 37 noch ungehindert erfolgen kann, so daß der Anschlagstift 63 zuverlässig den jeweils gewünschten Anschlagbolzen 58 oder 59 erreicht. Entsprechendes gilt einer Annäherung des Schwenkarmes 37 an die Anschlagbolzen 60 und 61, bei der er aufgrund der Wirkung des Federbolzens 68 eine Verzögerung seiner Verschiebebewegung erfährt.

Aus dem voranstehenden wird deutlich, daß mittels des Kappaggregates 10 durch einfaches Lösen oder Einrasten die Verriegelung 71 wahlweise Sägeschnitte fluchtend zu den Tastflächen 51 und 52 oder schräg zu den Tastflächen 51, 52 ausgeführt werden können. Hierbei kann die Justierung des Sägeblattes 32 auf einfache Weise mittels der Anschlagbolzen 58 und 61 erfolgen.

Die Betätigung der Verriegelung 71 kann manuell erfolgen oder auch mittels eines entsprechenden Antriebsaggregates, beispielsweise eines Kolben-Zylinderaggrega-tes. Dies gibt die Möglichkeit, sowohl die Betätigung des Kolben-Zylinderaggregates 54 als auch die Betätigung der Verriegelung 71 zentral durch Bedienungsaggregate der Maschine zur Bearbeitung der Werkstücke 20 zu steuern.

## Patentansprüche

1. Kappaggregat für Maschinen zur Bearbeitung eines geradlinig und fortlaufend bewegten plattenförmigen Werkstückes zum Abtrennen von über die vorderen und/oder hinteren, im wesentlichen quer zur Bewegungsrichtung des Werkstückes ausgerichteten Querseiten des Werkstückes hinausragenden Überständen von Kantenmaterial, welches an parallel zur Bewegungsrichtung verlaufenden Längsseiten des Werkstückes angebracht ist, mit einer ein motorisch angetriebenes Sägeblatt umfassenden Sägeeinheit, die zwischen einer Stellung oberhalb des Werkstückes und einer Stellung unterhalb des Werkstückes verfahrbar gehalten ist, und mit einem dem Sägeblatt zugeordneten, zumindest eine Tastfläche aufweisenden Tastorgan, wobei die Tastfläche an die vordere oder hintere Querseite des Werkstückes anlegbar und die Schnittebene des Sägeblattes fluchtend zur Tastfläche ausrichtbar ist, **dadurch gekennzeichnet, daß** das Sägeblatt (32) zwischen einer ersten, fluchtend zur Tastfläche (51, 52) ausgerichteten Arbeitsstellung und einer zweiten, schräg zur Tastfläche (51, 52) ausgerichteten Arbeitsstellung verschwenkbar gehalten ist, wobei das Kappaggregat (10) verstellbare Anschläge (58, 59, 60 und 61) umfaßt zur Ausrichtung des Sägeblatts (32) in seiner ersten, fluchtenden Arbeitsstellung und in seiner zweiten, schräg ausgerichteten Arbeitsstellung.

2. Kappaggregat nach Anspruch 1, **dadurch gekennzeichnet, daß** das Sägeblatt (32) in der zweiten Arbeitsstellung in einem Winkel (α) von bis zu etwa 15° zur Tastfläche (51, 52) positionierbar ist.

3. Kappaggregat nach Anspruch 1 oder 2, **dadurch gekennzeichnet, daß** das Tastorgan (49) eine erste Tastfläche (51) zur Anlage an die in Bewegungsrichtung (22) vordere Querseite (24) des Werkstückes (20) und eine zweite Tastfläche (52) zur Anlage an die in Bewegungsrichtung (22) hintere Querseite (26) des Werkstückes (20) umfaßt, wobei das Sägeblatt (32) sowohl fluchtend zu den jeweiligen Tastflächen (51, 52) als auch schräg zu den jeweiligen Tastflächen (51, 52) ausrichtbar ist.

4. Kappaggregat nach Anspruch 3, **dadurch gekennzeichnet, daß** das Tastorgan (49) und das Sägeblatt (32) verschiebbar zueinander gehalten sind und das Sägeblatt (32) bezogen auf die vordere und auf die hintere Tastfläche (51, 52) jeweils zwischen einer ersten, fluchtenden Arbeitsstellung und einer zweiten, schräg ausgerichteten Arbeitsstellung verschwenkbar ist.

5. Kappaggregat nach Anspruch 4, **dadurch gekennzeichnet, daß** das Sägeblatt (32) mittels eines Kofben-Zylinderaggregates (54) verschwenkbar ist.

6. Kappaggregat nach Anspruch 4 oder 5, **dadurch gekennzeichnet, daß** das Sägeblatt (32) mittels des Kolben-Zylinderaggregates (54) verschwenkbar und verschiebbar ist.

7. Kappaggregat nach einem der voranstehenden Ansprüche, **dadurch gekennzeichnet, daß** das Kappaggregat (10) ein parallel zur Bewegungsrichtung (22) des Werkstückes (20) verschiebbares Führungselement (41) umfaßt zum Verschieben der Sägeeinheit (28) relativ zum Tastorgan (49), wobei die Sägeeinheit (28) um eine vertikale Schwenkachse (39) verschwenkbar am Führungselement (41) gehalten ist.

8. Kappaggregat nach Anspruch 7, **dadurch gekennzeichnet, daß** das Führungselement einen Horizontalschlitten (41) umfaßt, an dem Sägeeinheit (28) schwenkbar gelagert ist.

9. Kappaggregat nach Anspruch 7 oder 8, **dadurch gekennzeichnet, daß** die Sägeeinheit (28) an einem Schwenkarm (37) festgelegt ist, der schwenkbar am Führungselement (41) gelagert ist.

10. Kappaggregat nach Anspruch 9, **dadurch gekennzeichnet, daß** der Schwenkarm (37) mittels eines Kolben-Zylinderaggregates (54) verschwenkbar ist.

11. Kappaggregat nach Anspruch 10, **dadurch gekennzeichnet, daß** das Kolben-Zylinderaggregat (54) am Schwenkarm angelenkt ist.

12. Kappaggregat nach einem der Ansprüche 7 bis 11, **dadurch gekennzeichnet, daß** die Sägeeinheit (28) mit in erster Arbeitsstellung ausgerichtetem Sägeblatt (32) am Führungselement (41) lösbar fixierbar ist.

13. Kappaggregat nach Anspruch 1, **dadurch gekennzeichnet, daß** die Anschläge (58, 59, 60, 61) in Bewegungsrichtung (22) des Werkstückes (20) verstellbar sind.

14. Kappaggregat nach einem der voranstehenden Ansprüche, **dadurch gekennzeichnet, daß** den Anschlägen (58, 59, 60, 61) mindestens ein Federelement (66, 68) zugeordnet ist zur Verzögerung einer Verschiebebewegung der Sägeeinheit (28) bei Annäherung an einen Anschlag (58, 59, 60, 61).

15. Kappaggregat nach Anspruch 14, **dadurch gekennzeichnet, daß** das Federelement als an den Horizontalschlitten (41) anlegbarer Federbolzen (66, 68) ausgestaltet ist.

## Claims

1. Cutting unit for machines for processing a linearly and continuously moved plate-like workpiece in order to cut off projecting lengths of edge material which is fitted to longitudinal sides of the workpiece that extend in parallel with the direction of movement, which lengths project beyond the front and/or rear transverse sides of the workpiece that are orientated substantially transversely relative to the direction of movement of the workpiece, having a saw unit which comprises a motor-driven saw blade and which is held so as to be displaceable between a position above the workpiece and a position below the workpiece, and having a contact member which is associated with the saw blade and which has at least one contact face, the contact face being able to be positioned against the front or rear transverse side of the workpiece and the cutting plane of the saw blade being able to be orientated so as to be aligned with the contact face, **characterised in that** the saw blade (32) is held so as to be pivotable between a first work position, which is orientated so as to be aligned with the contact face (51, 52), and a second work position, which is orientated in an inclined manner relative to the contact face (51, 52), the cutting unit (10) comprising adjustable stops (58, 59, 60 and 61) in order to orientate the saw blade (32) in the first aligned work position and in the second work position thereof which is orientated in an inclined manner.

2. Cutting unit according to claim 1, **characterised in that** the saw blade (32) can be positioned in the second work position at an angle (a) of up to approximately 15° relative to the contact face (51, 52).

3. Cutting unit according to claim 1 or 2, **characterised in that** the contact member (49) comprises a first contact face (51) for being positioned against the front transverse side (24) of the workpiece (20) in the direction of movement (22) and a second contact face (52) for being positioned against the rear transverse side (26) of the workpiece (20) in the direction of movement (22), the saw blade (32) being able to be orientated both so as to be aligned with the respective contact faces (51, 52) and in an inclined manner relative to the respective contact faces (51, 52).

4. Cutting unit according to claim 3, **characterised in that** the contact member (49) and the saw blade (32) are held so as to be displaceable relative to each other and the saw blade (32) can be pivoted relative to the front and the rear contact face (51, 52) between a first aligned work position and a second work position which is orientated in an inclined manner.

5. Cutting unit according to claim 4, **characterised in that** the saw blade (32) can be pivoted by means of a piston/cylinder unit (54).

6. Cutting unit according to claim 4 or 5, **characterised in that** the saw blade (32) can be pivoted and displaced by means of the piston/cylinder unit (54).

7. Cutting unit according to any one of the preceding claims, **characterised in that** the cutting unit (10) comprises a guide element (41) which can be displaced in parallel with the direction of movement (22) of the workpiece (20) in order to displace the saw unit (28) relative to the contact member (49), the saw unit (28) being held on the guide element (41) so as to be pivotable about a vertical pivot axis (39).

8. Cutting unit according to claim 7, **characterised in that** the guide element comprises a horizontal carriage (41), on which the saw unit (28) is pivotably supported.

9. Cutting unit according to claim 7 or 8, **characterised in that** the saw unit (28) is secured to a pivoting arm (37) which is pivotably supported on the guide element (41).

10. Cutting unit according to claim 9, **characterised in that** the pivoting arm (37) can be pivoted by means of a piston/cylinder unit (54).

11. Cutting unit according to claim 10, **characterised in that** the piston/cylinder unit (54) is articulated to the pivoting arm.

12. Cutting unit according to any one of claims 7 to 11, **characterised in that** the saw unit (28) can be releasably fixed to the guide element (41) with the saw blade (32) orientated in the first work position.

13. Cutting unit according to claim 1, **characterised in that** the stops (58, 59, 60, 61) can be adjusted in the direction of movement (22) of the workpiece (20).

14. Cutting unit according to any one of the preceding claims, **characterised in that** at least one resilient element (66, 68) is associated with the stops (58, 59, 60, 61) in order to reduce the speed of a displacement movement of the saw unit (28) when a stop (58, 59, 60, 61) is approached.

15. Cutting unit according to claim 14, **characterised in that** the resilient element is constructed as a resilient stud (66, 68) which can be positioned against the horizontal carriage (41).

## Revendications

1. Ensemble de coupe destiné à des machines à usiner une pièce en forme de plaque qui est déplacée linéairement en continu, et servant à détacher des projections de matière en bordure qui font saillie au-dessus des côtés transversaux avant et arrière de la pièce qui sont orientés sensiblement transversalement à la direction de déplacement de la pièce, lequel ensemble de coupe est monté sur des côtés longitudinaux de la pièce qui s'étendent parallèlement à la direction de déplacement, l'ensemble de coupe comprenant une unité de sciage comportant une lame de scie entraînée par moteur et maintenue mobile entre une position au-dessus de la pièce et une position au-dessous de la pièce, et un organe palpeur associé à la lame de scie et comportant au moins une face de palpeur, la face de palpeur s'appuyant contre le côté transversal avant ou arrière de la pièce transversale et le plan de coupe de la lame de scie étant orientable de façon à s'aligner avec la face de palpeur, **caractérisé en ce que** la lame de scie (32) est maintenue pivotante entre une première position de travail orientée en alignement avec la face de palpeur (51, 52), et une deuxième position de travail inclinée par rapport à la face de palpeur (51, 52), l'ensemble de coupe (10) comportant des butées réglables (58, 59, 60 et 61) afin d'orienter la lame de scie (32) dans sa première position de travail en alignement et dans sa deuxième position de travail inclinée.

2. Ensemble de coupe selon la revendication 1, **caractérisé en ce que** la lame de scie (32) peut être positionnée dans la deuxième position de travail avec un angle (α) pouvant atteindre 15° environ par rapport à la face de palpeur (51, 52).

3. Ensemble de coupe selon la revendication 1 ou 2, **caractérisé en ce que** l'organe de palpeur (49) présente une première face de palpeur (51) destinée à porter contre le côté transversal avant (24), par référence à la direction du mouvement (22), de la pièce (20), et une deuxième face de palpeur (52) destinée à porter contre le côté transversal arrière (26), par référence à la direction du mouvement (22), de la pièce (20), la lame de scie (32) étant orientable aussi bien en alignement avec les faces de palpeur respectives (51, 52) qu'en inclinaison par rapport aux faces de palpeur respectives (51, 52).

4. Ensemble de coupe selon la revendication 3, **caractérisé en ce que** l'organe de palpeur (49) et la lame de scie (32) sont maintenus mobiles en translation l'un par rapport à l'autre, et **en ce que** la lame de scie (32) est apte à pivoter par rapport aux faces de palpeur avant et arrière (51, 52) entre une première position de travail en alignement et une deuxième position de travail inclinée.

5. Ensemble de coupe selon la revendication 4, **caractérisé en ce que** la lame de scie (32) est apte à pivoter au moyen d'une unité à cylindre et piston (54).

6. Ensemble de coupe selon la revendication 4 ou 5, **caractérisé en ce que** la lame de scie (32) est apte à pivoter et à se déplacer en translation au moyen de l'unité à cylindre et piston (54).

7. Ensemble de coupe selon l'une des revendications précédentes, **caractérisé en ce que** l'ensemble de coupe (10) comporte un élément de guidage (41) mobile en translation parallèlement à la direction du mouvement (22) de la pièce (20), afin de déplacer en translation l'unité de sciage (28) par rapport à l'organe de palpeur (49), l'unité de sciage (28) étant maintenue sur l'élément de guidage (41) de façon pouvoir pivoter autour d'un axe de pivotement vertical (39).

8. Ensemble de coupe selon la revendication 7, **caractérisé en ce que** l'élément de guidage comporte un chariot horizontal (41) sur lequel l'unité de sciage (28) est montée de façon à pouvoir pivoter.

9. Ensemble de coupe selon la revendication 7 ou 8, **caractérisé en ce que** l'unité de sciage (28) est fixée à un bras pivotant (37) qui est monté à pivotement sur l'élément de guidage (41).

10. Ensemble de coupe selon la revendication 9, **caractérisé en ce que** le bras pivotant (37) est apte à pivoter au moyen d'une unité à cylindre et piston (54).

11. Ensemble de coupe selon la revendication 10, **caractérisé en ce que** l'unité à cylindre et piston (54) est articulée sur le bras pivotant.

12. Ensemble de coupe selon l'une des revendications 7 à 11, **caractérisé en ce que** l'unité de sciage (28) peut être fixée de façon amovible à l'élément de guidage (41) avec la lame de scie (32) orientée dans une première position de travail.

13. Ensemble de coupe selon la revendication 1, **caractérisé en ce que** les butées (58, 59, 60, 61) sont réglables dans la direction du mouvement (22) de la pièce (20).

14. Ensemble de coupe selon l'une des revendications précédentes, **caractérisé en ce qu'**au moins un élément ressort (66, 68) est associé aux butées (58, 59, 60, 61) afin de retarder le mouvement de translation de l'unité de sciage (28) à l'approche d'une butée (58, 59, 60, 61).

15. Ensemble de coupe selon la revendication 14, **caractérisé en ce que** l'élément ressort est conformé en poussoir à ressort pouvant s'appuyer contre le chariot horizontal (41).
